# EUROPÄISCHE PATENTSCHRIFT

(11) **EP 4 610 242 B1**
(45) Veröffentlichungstag und Bekanntmachung des Hinweises auf die Patenterteilung: **08.04.2026**
(21) Anmeldenummer: 24159923.2
(22) Anmeldetag: 27.02.2024
(51) Int. Cl.: C04B 28/10, C04B 28/12, E04C 1/40, E04B 2/02

(54) **BAUELEMENT AUS HANFKALK UND VERFAHREN ZUR HERSTELLUNG EINES SOLCHEN BAUELEMENTS**
HEMP LIME MASONRY COMPONENT AND METHOD FOR PRODUCING SUCH A COMPONENT
CHANVRE-CHAUX COMPOSANT ET PROCÉDÉ DE FABRICATION D'UN TEL COMPOSANT

(43) Veröffentlichungstag der Anmeldung: 03.09.2025
(73) Patentinhaber: Özenc, Abdullah, 6020 Emmenbrücke (CH)
(72) Erfinder: Özenc, Abdullah, 6020 Emmenbrücke (CH)
(74) Vertreter: Christ, Niko

(56) Entgegenhaltungen:
- EP-B1- 2 582 893
- WO-A2-2006/003320
- US-A1- 2016 194 874
- US-A1- 2019 226 205
- US-A1- 2023 303 440
- LINDA GIRESINI ET AL: "Innovative mix design with bionatural aggregates for precast vibro compressed units", BRICK AND BLOCK MASONRY: TRENDS, INNOVATIONS AND CHALLENGES - PROCEEDINGS OF THE 16TH INTERNATIONAL BRICK AND BLOCK MASONRY CONFERENCE, IBMAC 2016 - BRICK AND BLOCK MASONRY: TRENDS, INNOVATIONS AND CHALLENGES - PROCEEDINGS OF THE 16TH INTERNATIONAL B, 30 June 2016 (2016-06-30), pages 925 - 930, XP055628881, ISBN: 978-1-138-02999-6, [retrieved on 20191004]
- SHANG YINA ET AL: "Hempcrete building performance in mild and cold climates: Integrated analysis of carbon footprint, energy, and indoor thermal and moisture buffering", vol. 206, 1 December 2021 (2021-12-01), pages 108377, XP009556511, ISSN: 1873-684X, Retrieved from the Internet <URL:https://doi.org/10.1016/j.buildenv.2021.108377> [retrieved on 20210922], DOI: 10.1016/J.BUILDENV.2021.108377

## Beschreibung

Die vorliegende Erfindung betrifft ein Bauelement, umfassend einen Block aus Hanfkalk, welcher als Mischung aus Hanffasern und einer Matrix aus einem Bindemittel und Wasser gebildet ist, sowie ein Verfahren zur Herstellung eines solchen Bauelements.

Ein solches Bauelement und ein Verfahren zu dessen Herstellung sind bereits aus der US 2016/194874 A1 vorbekannt.

Weiter sind derartige Bauelemente aus Hanfkalk und einem Bindemittel sind aus den Schriften KR 100654968 B1, AU 2021100288 A4, WO 2006/003320 A2, NL1040134 C2 und EP 2 582 893 B1 vorbekannt.Schließlich ist auf die Schriften , XP 556 288 81 A, XP 9556511 A und US 2019 0226 205 A1 zu verweisen.

Hanfkalk, eine Mischung aus Hanffasern, Wasser und einem Bindemittel, bietet eine umweltfreundliche und gesunde Alternative zu herkömmlichen Baumaterialien mit einer Vielzahl von positiven Eigenschaften für den Bau und die Renovierung von Gebäuden. So ist Hanfkalk ein nachhaltiges Material, denn Hanf ist eine schnell wachsende Pflanze, die wenig Wasser und keine Pestizide benötigt. Die Verwendung von Hanf als Baumaterial reduziert die Umweltbelastung im Vergleich zu herkömmlichen Materialien. Hanfkalk bietet zudem eine ausgezeichnete Wärme- und Schalldämmung, was dazu beiträgt, den Energieverbrauch für Heizung und Kühlung zu reduzieren. Ein weiterer Vorteil ist, dass Hanfkalk ein atmungsaktives Material ist, das Feuchtigkeit aus der Luft aufnehmen und wieder abgeben kann. Dadurch wird durch die Verwendung von Hanfkalk ein angenehmes und gesundes Raumklima geschaffen. Die im Hanfkalk verwendeten Hanffasern sind außerdem von Natur aus widerstandsfähig gegenüber Feuer und Schädlingen.

Der sogenannte Hanfkalk oder Hanfbeton wird hergestellt, indem die zellulosereichen Fasern, insbesondere gebrochene, holzähnliche Teilchen, die beim Prozess der Entholzung des Pflanzenstängels anfallen, der Hanfpflanze mit einem Bindemittel aus Kalk und Wasser gemischt werden. Die dadurch entstehende Masse kann in Wände, Mauersteine und Fundamente gegossen werden, wobei sie nur einen Bruchteil des Gewichts von Beton hat. Bei der Herstellung von Hanfkalk hat sich zudem das Spritzverfahren bewährt. Beim Spritzverfahren werden die Hanffasern und das Bindemittel mit einer speziell für den Baustoff entwickelten Spritzmaschine verarbeitet. Hierbei wird der Hanfkalk durch Luftdruck auf die Schalung gespritzt, an welcher er haftet und zugleich verdichtet wird. Es können mehrere Schichten aufgetragen werden, bis die gewünschte Wandstärke erreicht ist. Eine gleichmäßige Verteilung des Baustoffs und eine ebene Wandoberfläche werden durch das Abziehen mittels großer Kartätschen erreicht.

Bei der Herstellung von Hanfkalk kommen verschiedene Bindemittel zum Einsatz. Eingesetzt werden hauptsächlich hydraulische und nichthydraulische Kalke. Hydraulischer Kalk ist ein Kalk, dessen Hauptbestandteile Calciumoxid (CaO), Magnesiumoxid (MgO), Siliciumdioxid (SiO₂), Aluminiumoxid (Al₂O₃) und Eisenoxid (Fe₂O₃) sind. Hydraulischer Kalk verfestigt sich nach einer bestimmten Zeit der Luftlagerung. Die Erhärtung ist zurückzuführen auf die Reaktion des Calciumhydroxids (Ca(OH)₂) mit Luftkohlensäure zu Calciumcarbonat (CaCO₃), oder die Hydratbildung von Calciumsilikaten, -aluminaten und -ferriten mit dem zugesetzten Wasser. Nichthydraulische Kalke erhärten unter Luftzufuhr durch Aufnahme von Kohlendioxid aus der Luft und durch die Bildung von Calciumcarbonat. Sie gelten als besonders natürlich, da sie zum größten Teil nur aus gebranntem und gelöschtem natürlichen Kalkstein bestehen. Nichthydraulische Kalke härten aufgrund des Fehlens von Tonverunreinigungen wie Kieselsäure und Tonerde extrem langsam. In der Regel durchlaufen Kalke diesen Härtungsprozess über mehrere Jahre hinweg.

Da der Härteprozess über einen längeren Zeitraum, ggf. auch über Jahre verläuft, sind Wände aus Hanfbeton nicht sofort belastbar, üblicherweise werden sie nichttragend ausgeführt. Durch Beimischungen von Sand und/oder anderen Zuschlagstoffen wird der Stoff härter und druckfester, jedoch verliert er dabei an Wärmedämmfähigkeit.

Der Hanfkalk ist formstabil und fest, weist jedoch nur geringe Druckfestigkeiten auf und kann für monolithische, mehrgeschossige Massivbauweisen nur in Verbindung mit einem lastabtragenden Ständerwerk eingesetzt werden.

Der Erfindung liegt daher die Aufgabe zugrunde, ein stabiles Bauelement aus Hanfkalk und einem Einlegeteil zu erschaffen, welches eine erhöhte Festigkeit aufweist, sodass eine Massivbauweise ohne den Einsatz von einem zusätzlichen Ständerwerk realisiert werden kann.

Diese Aufgabe wird erfindungsgemäss durch das im Anspruch 1 definierte Erzeugnis und das im Anspruch 8 definierte Verfahren gelöst.

Es ist ein Bauelement, umfassend einen Block aus Hanfkalk vorgesehen, welcher als Mischung aus Hanffasern und einer Matrix aus einem Bindemittel und Wasser gebildet ist. Erfindungsgemäß ist das Bauelement dadurch gekennzeichnet, dass der Block wenigstens ein Einlegeteil mit einem Mantel aufweist, welcher vollständig von dem Block umschlossen ist.

Ein solches Bauelement kommt als vorgefertigtes Teilstück beim Bau von Häusern oder Maschinen zum Einsatz. Um mehrere Bauelemente übereinander anzuordnen, hat das Bauelement die Form eines Blocks, vorzugsweise die Form eines Quaders. Zur Herstellung eines Blocks aus Hanfkalk wird zunächst das Bindemittel mit dem Wasser und den Hanffasern vermengt und in eine

Form gegossen. Durch die Vermengung von Bindemittel, Hanffasern und Wasser entsteht eine Masse, die an der Luft fest wird. In der Form befindet sich wenigstens ein Einlegeteil, welches einen Mantel aufweist, der nun von dem Hanfkalk umschlossen wird. Ein solches Einlegeteil kann die Form eines Pfahls oder einer Verankerung haben, sodass das Bauelement durch das Einlegeteil stabilisiert wird.

Das wenigstens eine Einlegeteil kann zumindest einseitig wenigstens ein endständiges Funktionselement aufweisen, welches in eine Außenwand des Blocks mündet oder diese durchgreift. Ein endständiges Funktionselement, welches in eine Außenwand des Blocks mündet hat den Vorteil, dass es in einem nächsten Block befestigt werden kann. Somit lassen sich mehrere Blöcke abrutschsicher aufeinander stapeln.

In konkreter Ausführung kann das wenigstens eine Einlegeteil wenigstens eine Auskragung aufweisen, welche allseits von dem Hanfkalk umschlossen ist. Eine Auskragung befindet sich im Inneren des Blocks und sorgt dafür, dass das Einlegeteil nicht aus dem Block rutschen kann. Vorzugsweise ist diese Auskragung rückwärtsgerichtet oder senkrecht an dem Einlegeteil angebracht und verhindert so wie eine Art Widerhaken, dass das Einlegeteil aus dem Block gezogen werden kann.

Erfindungsgemäss ist der Block aus jeweils gleichen Volumenanteilen von Hanffasern, Bindemittel und Wasser gefertigt. Hanfkalk kann in unterschiedlichen Verhältnissen zwischen Bindemittel und Hanffasern hergestellt werden. Je höher der Bindemittel-Anteil ist, desto höher ist die Rohdichte des Hanfkalks und desto niedriger sind die wärmedämmenden Eigenschaften. Es ist für die Dämmeigenschaften vorteilhaft, ein Mischverhältnis aus gleichen Volumenanteilen von Hanffasern, Bindemittel und Wasser zu verwenden.

Das Bindemittel ist aus einem nichthydraulischen oder einem hydraulischen

Kalk gebildet. Als Bindemittel kann hydraulischer Kalk, natürlich hydraulischer Kalk, formulierter Kalk oder Luftkalk eingesetzt werden.

In konkreter Ausführung können die Funktionselemente zweier Blöcke als Nut und Feder ineinander steckbar sein. Zwei Funktionselemente an unterschiedlichen Blöcken, welche wie Nut und Feder ineinander steckbar sind, sind deshalb vorteilhaft, weil sich dadurch leicht mehrere Blöcke miteinander verbinden lassen. Die zusammengesteckten Funktionselemente geben dem Bauwerk einen zusätzlichen Halt und mehr Tragfähigkeit.

Bevorzugtermaßen können die Einlegeteile aus Metall, Kunststoff, Holz, Onyx oder aus einem glasfaserverstärkten Polyamid gebildet sein. Je nach geforderter Verstärkung sind Einlegeteile aus den verschiedensten Materialien denkbar. Über die Wahl des Materials lässt sich die Festigkeit des Bauelements steuern.

Eine Außenfläche des Blocks kann eine Dämmschicht aufweist. Um die wärmedämmenden und schalldämmenden Eigenschaften des Hanfkalks zu verstärken, kann an einer Außenfläche des Blocks eine solche Dämmschicht angebracht sein. Es ist besonders vorteilhaft, wenn die Dämmschicht vollflächig auf einer Außenwand aufliegt. Als Dämmmaterial können unter anderem Steinwolle, Kork, Polystyrol-Dämmstoffe der Polyurethan-Hartschaum eingesetzt werden.

Um die Wärmedämmeigenschaften des Bauelements zu verbessern kann die Dämmschicht aus Polyethylenterephthalat oder Polypropylen gebildet sein. Die beiden Materialien gehören zu der Gruppe der Thermoplaste, die sich dadurch auszeichnet, dass sie sich bei einer bestimmten Temperatur verformen lassen.

Es ist darüber hinaus ein Verfahren zur Herstellung eines blockförmigen Bauelements vorgesehen, wobei eine Matrix aus Wasser und Bindemittel hergestellt und mit Hanffasern zu einem Hanfkalk vermischt wird und der Hanfkalk in eine Blockform eingefüllt und ausgehärtet wird. Erfindungsgemäß ist das Verfahren dadurch gekennzeichnet, dass in die Blockform wenigstens ein Einlegeteil eingesetzt und dieses beim Einfüllen mit Hanfkalk umschlossen wird.

Das wenigstens eine Einlegeteil kann wenigstens eine Auskragung aufweisen, welche von dem Hanfkalk formschlüssig umgeben wird. Die wenigstens eine Auskragung ist bevorzugterweise in entgegengesetzter Richtung oder senkrecht zum Einlegeteil angebracht, sodass die Auskragung als Schutz vor dem versehentlichen Herausrutschen des Einlegeteils dient. Dies ist besonders dann vorteilhaft, wenn das Einlegeteil in einer Außenwand mündet oder diese durchgreift. Die Auskragung kann unterschiedlichste Formen annehmen und beispielsweise Schraubenförmig um das Einlegeteil gebildet sein, in einer oder mehreren Ebenen aus dem Einlegeteil vorstehen und flächig, zapfenförmig oder andersartig geformt in das umgebende Material einragen.

Damit sich die Hanffasern gleichmässig im Hanfkalk verteilen und Luftporen aus dem Hanfkalk entweichen können, kann es vorteilhaft sein, wenn der Hanfkalk nach dem Einfüllen des Wasser-Bindemittel-Hanfgemisches vibriert wird. Bei der Herstellung von Steinen wird der Hanfkalk in Formen gegeben und über Vibration verdichtet.

Der Hanfkalk kann unter einer Temperatur zwischen 50°C und 70°C, vorzugsweise von wenigstens näherungsweise 60°C, für wenigstens näherungsweise einen Tag oder länger und/oder der Einwirkung von Druck zwischen 3 und 30 bar ausgehärtet werden. Eine Aushärtung durch die Einwirkung von Druck ist vorteilhaft, da sich je nach Druck Hanfkalk mit unterschiedlichen Materialeigenschaften herstellen lassen.

Die Einlegeteile können je nach verwendetem Ausgangsmaterial durch Spritzguss oder mit einem 3D-Druck hergestellt sein. Das Spritzgussverfahren eignet sich besonders um kostengünstig eine große Stückzahl an Einlegeteilen herzustellen, wohingegen speziell angepasste Maßanfertigungen mit dem 3D-Druckverfahren hergestellt werden können.

Die vorstehend beschriebene Erfindung wird im Folgenden anhand eines Ausführungsbeispiels näher erläutert.

Es zeigen
- Figur 1: Mehrere übereinander gesteckte Bauelemente mit hervorstehenden Funktionselementen,
- Figur 2: einen Querschnitt durch ein Bauelement,
- Figur 3: ein Einlegeteil mit mehreren Auskragungen, sowie
- Figur 4: ein Bauelement mit zusätzlicher Dämmschicht in einer Seitenansicht.

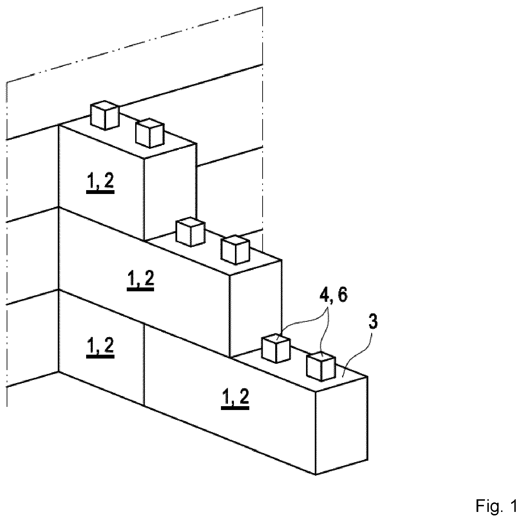

Figur 1 zeigt ein Bauwerk aus mehreren Bauelementen 1. Jedes einzelne Bauelement 1 hat die Form eines quaderförmigen Blocks 2. Aus einer oberen Außenwand 3 eines Blocks 2 ragen zwei endständige Funktionselemente 6 hervor. Die Funktionselemente 6 zweier Blöcke 2 können hierbei als Steckelemente, im Fall einer länglichen Formgebung wie Feder und Nut, ineinander gesteckt werden, sodass sich die Blöcke 2 übereinander stapeln lassen und einen Widerstand gegen eine seitliche Kraft aufbringen können. Ebenfalls kann so eine saubere Ausrichtung der Blöcke 2 sichergestellt werden. Die Funktionselemente 6 dienen folglich als Fixierung des Bauwerks.

Dargestellt sind hierbei im Wesentlichen längliche Blöcke 2, diese können aber auch andere Formen wie Rundungen, Kreuzungen oder eine T-Form aufweisen. Auch ist es möglich, die Blöcke 2 beim Verlegen zurecht zu schneiden, um sie an die Gegebenheiten anzupassen.

Ebenfalls ist es möglich, fertige Funktionselemente wie Tür- und Fensterstürze oder Bögen zu realisieren. Auch das Einarbeiten von Kabelkanälen, Dosen oder Öffnungen für Briefkästen und dergleichen kann direkt bei der Herstellung der Blöcke 2 erfolgen.

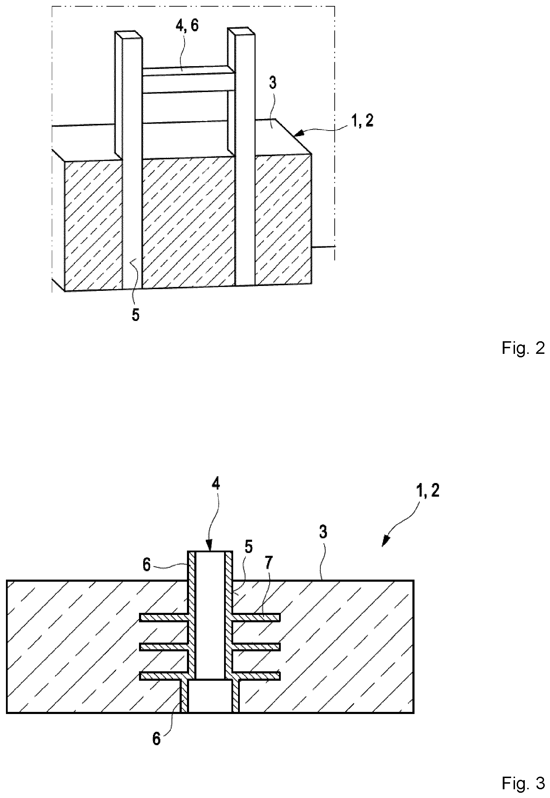

In Figur 2 ist ein Querschnitt durch ein Bauelement 1 dargestellt. Ein doppelt H-Förmiges Einlegeteil 4 durchgreift den Block 2 aus Hanfbeton, sodass dieser durch das Einlegeteil 4 stabilisiert wird. Im Inneren des Blocks 2 ist ein Mantel 5 vollständig von Hanfkalk umgeben. Die Funktionselemente 6 ragen aus dem Block 2 heraus. Wesentlich ist, dass die Funktionselemente 6, hier in Form eines Querverbinders zwischen zwei aufrechten Streben des Einlegeteils 4, von denen eine in der Darstellung außerhalb des Blocks 2 liegt, von Material umgeben ist. Der hier außen liegende Teil kann in einem späteren Schritt in Beton oder Hanfkalk eingebettet werden.

Figur 3 zeigt ein Einlegeteil 4, welches in dem Block 2 aus Hanfkalk befestigt ist und welches mehrere Auskragungen 7 ausweist. Die Auskragungen 7 sind senkrecht zum Einlegeteil 4 angebracht, sodass sie das Einlegeteil 4 vor dem Herausziehen aus dem Block 2 schützen. Die Auskragungen 7 sorgen zudem dafür, dass das Bauelement 1 zusätzlich stabilisiert wird. Das Einlegeteil 4 weist zwei Funktionselemente 6 und einen Mantel 5 auf. Der Mantel 5 ist vollständig von Hanfkalk umgeben. Ein Funktionselement 6 ragt aus dem Block 2 hervor, es ist so ausgestaltet, dass es sich in ein weiteres in dem Block 2 liegendes Funktionselement 6 stecken lässt, so dass mehrere solcher Blöcke 2 sich stapeln lassen wie in Figur 1 gezeigt.

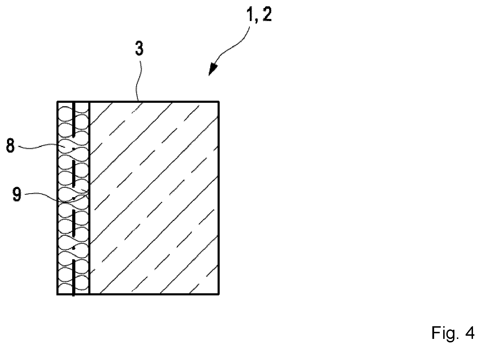

In Figur 4 ist ein Bauelement gezeigt, welches einen Block 2 aus Hanfkalk und eine zusätzliche Dämmschicht 8 aufweist. Die Dämmschicht 8 ist an einer Kontaktfläche 9 des Blocks 2 angebracht, um eine Wärmeisolierung zu erzeugen. Die Kontaktfläche 9 kann den Umfang einer Außenfläche 3 des Blocks 2 haben oder nur einen Teil einer Außenfläche 3 des Blocks 2 umfassen. Es ist möglich, mehrere Blöcke 2 miteinander zu befestigen, sodass die Dämmschichten 8 der Blöcke 2 aneinander angrenzen und eine durchgehende Isolierung erzeugen. Die Dämmschicht besteht aus einem Material mit geringer Wärmeleitfähigkeit, welches einen Wärme- oder Kälteverlust reduziert.

Vorstehend beschrieben ist ein stabiles Bauelement aus Hanfkalk und wenigstens einem Einlegeteil, mit einer verbesserten Festigkeit, sodass es ohne den Einsatz von einem zusätzlichen Ständerwerk verbaut werden kann.

### BEZUGSZEICHENLISTE

- 1: Bauelement
- 2: Block
- 3: Außenfläche
- 4: Einlegeteil
- 5: Mantel
- 6: Funktionselement
- 7: Auskragung
- 8: Dämmschicht
- 9: Kontaktfläche

## Patentansprüche

1. Bauelement, umfassend einen Block (2) aus Hanfkalk, welcher als Mischung aus Hanffasern und einer Matrix aus einem Bindemittel und Wasser gebildet ist,
**dadurch gekennzeichnet, dass** der Block (2) wenigstens ein Einlegeteil (4) mit einem Mantel (5) aufweist, welcher vollständig von dem Block (2) umschlossen ist, wobei der Block (2) aus jeweils gleichen Volumenanteilen von Hanffasern, Bindemittel und Wasser gefertigt ist und das Bindemittel aus einem nichthydraulischem Kalk oder hydraulischem Kalk gebildet ist.

2. Bauelement gemäß Anspruch 1, **dadurch gekennzeichnet, dass** das wenigstens eine Einlegeteil (4) zumindest einseitig wenigstens ein endständiges Funktionselement (6) aufweist, welches in eine Außenwand (3) des Blocks (2) mündet oder diese durchgreift.

3. Bauelement gemäß einem der Ansprüche 1 oder 2, **dadurch gekennzeichnet, dass** das wenigstens eine Einlegeteil (4) wenigstens eine Auskragung (7) aufweist, welche allseits von dem Hanfkalk umschlossen ist.

4. Bauelement gemäß einem der vorgenannten Ansprüche, **dadurch gekennzeichnet, dass** die Funktionselemente (6) zweier Blöcke (2) als Nut und Feder ineinander steckbar sind.

5. Bauelement gemäß einem der vorgenannten Ansprüche, **dadurch gekennzeichnet, dass** die Einlegeteile (4) aus Metall, Kunststoff, Holz, Onyx oder aus einem glasfaserverstärkten Polyamid gebildet sind.

6. Bauelement gemäß einem der vorgenannten Ansprüche, **dadurch gekennzeichnet, dass** eine Außenfläche (9) des Blocks (2) eine Dämmschicht (8) aufweist.

7. Bauelement gemäß Anspruch 6 **dadurch gekennzeichnet, dass** die Dämmschicht (8) aus Polyethylenterephthalat oder Polypropylen hergestellt ist.

8. Verfahren zur Herstellung eines blockförmigen Bauelements, wobei eine Matrix aus Wasser und Bindemittel hergestellt und mit Hanffasern zu einem Hanfkalk vermischt wird und der Hanfkalk in eine Blockform eingefüllt und ausgehärtet wird,
**dadurch gekennzeichnet, dass** in die Blockform wenigstens ein Einlegeteil (4) eingesetzt und dieses beim Einfüllen mit Hanfkalk umschlossen wird, wobei der Block (2) aus jeweils gleichen Volumenanteilen von Hanffasern, Bindemittel und Wasser gefertigt ist und das Bindemittel aus einem nichthydraulischem Kalk oder hydraulischem Kalk gebildet ist.

9. Verfahren gemäß Anspruch 8, **dadurch gekennzeichnet, dass** das wenigstens eine Einlegeteil (4) wenigstens eine Auskragung (7) aufweist, welche von dem Hanfkalk formschlüssig umgeben wird.

10. Verfahren gemäß einem der Ansprüche 8 oder 9, **dadurch gekennzeichnet, dass** der Hanfkalk nach dem Einfüllen vibriert wird.

11. Verfahren gemäß den Ansprüchen 8 bis 10, **dadurch gekennzeichnet, dass** der Hanfkalk unter einer Temperatur zwischen 50°C und 70°C, vorzugsweise von 60°C, für wenigstens einen Tag und/oder der Einwirkung von Druck zwischen 3 und 30 bar ausgehärtet wird.

12. Verfahren gemäß einem der Ansprüche 8 bis 11, **dadurch gekennzeichnet, dass** die Einlegeteile (4) durch Spritzguss oder additiv hergestellt werden.

## Claims

1. Building element comprising a block (2) made of hemp lime, which is formed as a mixture of hemp fibres and a matrix of a binder and water,
**characterised in that** the block (2) has at least one insert (4) with a shell (5) which is completely enclosed by the block (2), wherein the block (2) is made from equal volumes of hemp fibres, binding agent and water, and the binding agent is formed from non-hydraulic lime or hydraulic lime.

2. Component according to claim 1, **characterised in that** the at least one insert (4) has at least one terminal functional element (6) on at least one side, which opens into an outer wall (3) of the block (2) or penetrates it.

3. Component according to one of claims 1 or 2, **characterised in that** the at least one insert (4) has at least one projection (7) which is enclosed on all sides by the hemp lime.

4. Component according to one of the preceding claims, **characterised in that** the functional elements (6) of two blocks (2) can be inserted into each other as tongue and groove.

5. Component according to one of the preceding claims, **characterised in that** the inserts (4) are made of metal, plastic, wood, onyx or glass fibre reinforced polyamide.

6. Component according to one of the preceding claims, **characterised in that** an outer surface (9) of the block (2) has an insulating layer (8).

7. Component according to claim 6, **characterised in that** the insulating layer (8) is made of polyethylene terephthalate or polypropylene.

8. Method for producing a block-shaped building element, wherein a matrix of water and binding agent is produced and mixed with hemp fibres to form hemp lime, and the hemp lime is poured into a block mould and hardened,
**characterised in that** at least one insert (4) is placed in the block mould and this is enclosed by hemp lime when filling, wherein the block (2) is made from equal volumes of hemp fibres, binding agent and water, and the binding agent is formed from non-hydraulic lime or hydraulic lime.

9. Method according to claim 8, **characterised in that** the at least one insert (4) has at least one projection (7) which is surrounded by the hemp lime in a form-fitting manner.

10. Method according to one of claims 8 or 9, **characterised in that** the hemp lime is vibrated after filling.

11. Method according to claims 8 to 10, **characterised in that** the hemp lime is cured at a temperature between 50°C and 70°C, preferably 60°C, for at least one day and/or under pressure between 3 and 30 bar.

12. Method according to one of claims 8 to 11, **characterised in that** the inserts (4) are produced by injection moulding or additive manufacturing.

## Revendications

1. Élément de construction comprenant un bloc (2) en chanvre-chaux, qui est formé d'un mélange de fibres de chanvre et d'une matrice composée d'un liant et d'eau,
**caractérisé en ce que** le bloc (2) comporte au moins une pièce d'insertion (4) avec une enveloppe (5) qui est entièrement entourée par le bloc (2), le bloc (2) étant constitué de proportions volumiques identiques de fibres de chanvre, de liant et d'eau, et le liant étant constitué d'une chaux non hydraulique ou d'une chaux hydraulique.

2. Élément de construction selon la revendication 1, **caractérisé en ce que** la au moins une pièce d'insertion (4) présente, au moins d'un côté, au moins un élément fonctionnel terminal (6) qui débouche dans une paroi extérieure (3) du bloc (2) ou traverse celle-ci.

3. Élément de construction selon l'une des revendications 1 ou 2, **caractérisé en ce que** la au moins une pièce d'insertion (4) présente au moins un rebord (7) qui est entouré de tous côtés par le chanvre-chaux.

4. Élément de construction selon l'une des revendications précédentes, **caractérisé en ce que** les éléments fonctionnels (6) de deux blocs (2) peuvent être emboîtés l'un dans l'autre sous forme de rainure et languette.

5. Élément de construction selon l'une des revendications précédentes, **caractérisé en ce que** les inserts (4) sont en métal, en plastique, en bois, en onyx ou en polyamide renforcé de fibres de verre.

6. Élément de construction selon l'une des revendications précédentes, **caractérisé en ce qu'**une surface extérieure (9) du bloc (2) comporte une couche isolante (8).

7. Élément de construction selon la revendication 6, **caractérisé en ce que** la couche isolante (8) est fabriquée en polyéthylène téréphtalate ou en polypropylène.

8. Procédé de fabrication d'un élément de construction en forme de bloc, dans lequel une matrice composée d'eau et d'un liant est préparée et mélangée à des fibres de chanvre pour former un mortier de chanvre, lequel mortier est versé dans un moule en forme de bloc et durci,
**caractérisé en ce qu'**au moins une pièce d'insertion (4) est placée dans le moule à blocs et est entourée de chaux de chanvre lors du remplissage, le bloc (2) étant fabriqué à partir de proportions volumiques identiques de fibres de chanvre, de liant et d'eau, et le liant étant constitué de chaux non hydraulique ou de chaux hydraulique.

9. Procédé selon la revendication 8, **caractérisé en ce que** la au moins une pièce d'insertion (4) présente au moins un rebord (7) qui est entouré de manière solidaire par le chanvre-chaux.

10. Procédé selon l'une des revendications 8 ou 9, **caractérisé en ce que** la chaux de chanvre est vibrée après avoir été versée.

11. Procédé selon les revendications 8 à 10, **caractérisé en ce que** le chanvre-chaux est durci à une température comprise entre 50 °C et 70 °C, de préférence à 60 °C, pendant au moins un jour et/ou sous l'effet d'une pression comprise entre 3 et 30 bars.

12. Procédé selon l'une des revendications 8 à 11, **caractérisé en ce que** les inserts (4) sont fabriqués par moulage par injection ou par ajout.
